# EUROPEAN PATENT APPLICATION

(11) **EP 0 579 489 A1**
(43) Date of publication of application: **19.01.1994**
(21) Application number: 93305516.2
(22) Date of filing: 14.07.1993
(51) Int. Cl.: G08B 13/19

(54) **A security device**

(30) Priority: 15.07.1992 GB 9214980
(71) Applicant: APPLIED SECURITY DESIGN LIMITED, Rotherham S61 4RJ (GB)
(72) Inventor: Stewart, Anthony R., Whiston, Rotherham S61 4EH (GB)
(74) Representative: Allman, Peter John

(57) **Abstract**

A security device has a daylight sensor (2) and a passive infra-red circuit (1). In a PIR mode a lamp (3) is illuminated for a preset period of time when darkness is detected by the daylight sensor and movement of a warm body is detected by the infrared sensor. In a DS mode the lamp (3) is illuminated when darkness is detected by the daylight sensor and is extinguished when daytime is detected the following morning. The user is able to select the mode of operation. In DS mode the device may reset to PIR mode automatically once daylight is detected or a predetermined period of time has elapsed. The device is versatile, giving the user more options and does not require the user to reset the device to PIR mode.

## Description

The present invention relates to a security device and more particularly to such a device mounted on the exterior of buildings.

Security devices which have passive infra-red sensors are well known. The infra-red sensors are used to detect moving warm bodies such as humans or dogs. Often such devices are mounted to the exterior of property and illuminate lamps when they detect such bodies. The lamps are illuminated for a preset time period and upon expiry of this period they are extinguished and return to a state where they await another trigger from the sensor.

The above described security devices have limited versatility and can become a nuisance to the owner of the property. For example, the owner may have an evening barbecue in his garden and entertain a number of guests in which case it is a nuisance for the lamp to be switching on and off detecting the presence of the various bodies. However, it is usually desirable for him to have some form of illumination when daylight fades.

It is an object of the present invention to obviate or mitigate the aforesaid disadvantages.

According to the present invention there is provided a security device comprising an intruder sensor, an ambient light sensor and a light wherein in a first mode of operation of said device said light is illuminated when the ambient light is sensed to have fallen below a predetermined level of brightness and in a second mode of operation of said device said light is illuminated when an intruder is sensed and the ambient light is sensed to have fallen below said predetermined level and wherein there is provided means for switching between said first and second modes.

Preferably the device automatically resets to the second mode after a period of operation in the first mode. The period may be set by a timer or alternatively may be terminated by the ambient light having been sensed to have increased to a level of brightness.

Preferably in said second mode the lamp is illuminated for a predetermined period of time.

A specific embodiment of the present invention will now be described by way of example with reference to the accompanying drawings in which:
Figure 1 is a schematic block diagram of operation of the security device of the present invention;
Figure 2 is a circuit diagram of part of the security device; and
Figure 3 is a circuit diagram of another part of the security device.

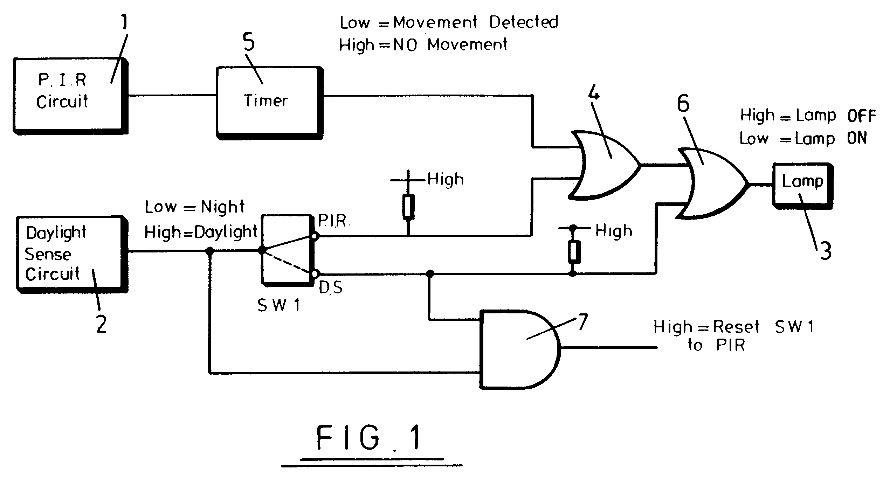

Referring now to figure 1, there is shown a passive infrared (PIR) circuit 1 which is activated by a passive infra-red sensor (not shown) and a daylight sense circuit 2 which is activated by, for example, a light dependent resistor. The infra-red sensor is triggered when the movement of a warm body e.g. a human or dog is detected and the photocell sensor is triggered when the daylight brightness reaches a predetermined threshold. When the circuits are triggered the signals are fed through logic circuitry and, depending on the conditions of the circuit, a lamp 3 may be illuminated. The lamp 3 is typically mounted on the exterior of the property to which the device is fitted.

A two position switch SW1 is provided to allow a user to choose between two modes of operation of the device. In the first mode (P.I.R. mode) both the P.I.R. circuit and the daylight sense circuit are active and the lamp is illuminated when there is a LOW signal on both the inputs of OR gate 4. This occurs when it is night time (output of D.S. circuit is LOW) and movement is detected (output of P.I.R. circuit is LOW). When the PIR circuit is triggered a timer 5 is activated which maintains the movement detected condition (LOW) for a set period of time after which it resumes to the HIGH level. Hence when movement is detected at nighttime the lamp is illuminated for a predetermined period before being extinguished.

In the second mode of operation (DS mode) the lamp is illuminated automatically when darkness falls i.e. when the output of the daylight sense circuit is LOW. In the morning at dawn daylight is detected by the DS circuit which then has a HIGH output. The output of the DS circuit is connected to an input of OR gate 6 and when this is HIGH the lamp is extinguished.

Figure 1 has an optional feature shown schematically by AND gate 7. When the circuit is operating in DS mode as selected by the user and daylight is detected, the output of the AND gate is set HIGH. When the output of the AND gate 7 is HIGH switch SW1 is reset to PIR mode. This enables automatic resetting of the device to PIR mode after a night in which it has operated in DS mode.

It is to be understood that this optional feature can be achieved by alternative circuitry, for example, instead of using the detection of daylight to reset switch SW1, a timer circuit can be employed to ensure that the lamp is only illuminated in DS mode for a predetermined period (roughly corresponding to the length of darkness). The predetermined period may be varied by the user to take account of the variation in the length of darkness which depends on the time of year.

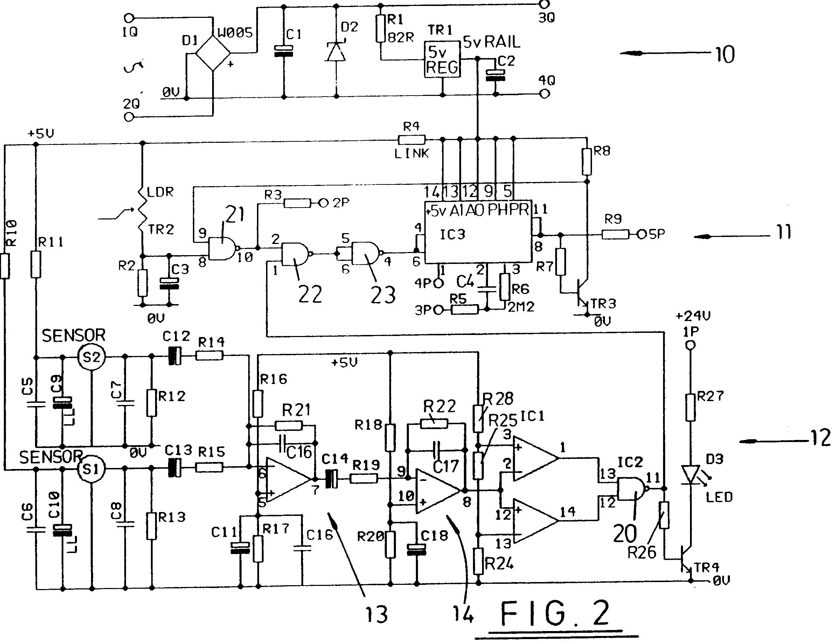

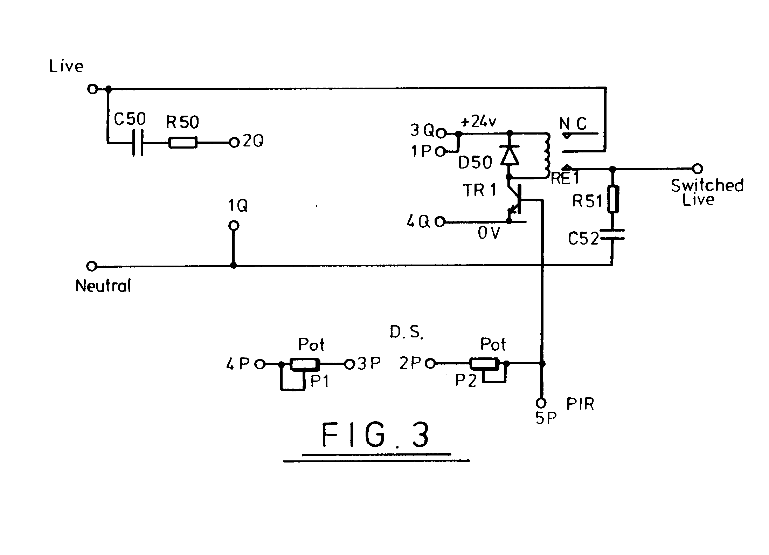

Referring now to figures 2 and 3, figure 2 shows the PIR and DS circuits in detail and figure 3 shows the circuitry represented schematically in figure 1 by SW1, OR gates 4,6 and the lamp 3. The circuit of figure 2 is split into three parts 10,11,12. The upper part 10, together with C50 and R50 from figure 3 forms a power supply for the circuit. The power supply is driven from the household mains and provides a smooth, steady 5V D.C. rail for the digital circuitry.

The lower part 12 of the circuit is the PIR circuit. There are two passive infra-red sensors S1 and S2 each having a field of vision of 90 degrees thus providing a total field of vision for the device of 180 degrees. The signals from the sensors S1,S2 then pass through two amplification stages 13,14. The amplified signals are then passed to a comparator stage IC1 which compares the magnitude of each of the amplified sensor signals with preset thresholds. If either of the thresholds is exceeded the output (pin 11) of NAND gate 20 is HIGH and the light emitting diode D3 is illuminated to indicate that a trigger has occurred. The output of the NAND gate is also connected to the middle part of the circuitry 11 the left hand side of which forms the daylight sensor circuit.

The daylight sensor is denoted by a light dependent resistor TR2 in figure 2 but other light sensing devices can be used such as a photocell or phototransistor. The light dependent resistor TR2 forms a voltage divider with R2, the output of the divider being connected to an input (pin 8) of a NAND gate 21. The other input (pin 9) to the NAND gate 21 is tied HIGH. Hence the output (pin 10) of the NAND gate 21 will change state when the voltage on input pin 8 changes state. The output of the NAND gate 21 is connected to an input (pin 2) of NAND gate 22 and to connection point 2P via resistor R3. Connection point 2P is the output of the daylight sense circuit and is connected to a potentiometer P2 shown in figure 3. The other input (pin 1) to NAND gate 22 is connected to the output of the PIR circuit (IC2 pin 11). Thus the output of the NAND gate 22 is LOW only when the outputs of the PIR circuit and the daylight sense circuits are both HIGH. The output of the NAND gate 22 is connected via NAND gate 23 (acting as a NOT gate) to the enable pin of a timer chip IC3. The output of the timer chip circuit (pin 8 IC3) is connected via R9 and connection point 5P to the base of transistor TR1 on the circuit of figure 3. The collector of the transistor TR1 is connected to a relay RE1 which switches the lamp (not shown in figure 3) on or off.

In figure 3 the outputs 5P of the timer IC3 and 2P of the daylight sense circuit are connected via an effective OR gate to the lamp relay RE1. The potentiometer P2 is the means by which the user selects the mode of operation of the circuit. To select the daylight sense mode the potentiometer is set to zero resistance and the output from the daylight sense circuit is passed to the base of transistor TR1 to illuminate or extinguish the lamp. To select the PIR mode of operation the potentiometer P2 is set to the highest resistance which allows the output from the PIR circuit to pass to the base of TR1 via the timer IC3.

At very low light levels the light dependent resistor TR2 has a much higher resistance than R2 and the voltage appearing at pin 8 of the NAND gate-21 is LOW. In this condition the output on pin 10 of NAND gate 21, and thus the output of the daylight sense circuit is HIGH. In daylight sense mode this output is passed to the lamp relay RE1 and the lamp is illuminated. At increasingly higher levels of daylight the resistance of TR2 falls and at a certain point the circuit is triggered so that the output 2P is LOW and the lamp is extinguished. The circuit has built-in hysteresis to avoid multiple triggering of the circuit.

In PIR mode when the output of daylight sense circuit is HIGH (i.e. darkness is detected) and the output of the PIR circuit is HIGH (i.e. movement is detected) the timer IC3 is enabled and the output 5P is passed to the relay RE1 to illuminate the lamp for a preset period of time dictated by the timer IC3.

It is to be understood that the potentiometer arrangement P2 can be replaced by an appropriate two position switch to select between PIR and DS modes.

It is to be appreciated that the time period set by the timer to determine how long the lamp is illuminated once the movement has been detected can be varied by using well known circuitry according to the user's requirements.

The circuitry may be used to control a plurality of lamps.

Detailed circuitry of the automatic reset of the circuit from DS mode to PIR mode is not shown. However it should be apparent to a skilled person in the art that there are a number of possible ways of designing this part of the circuit.

The above device provides for a versatile security unit in which the user can choose the mode of operation. He can choose to have the lamp illuminate only when movement of a body is detected at night (PIR mode) and can choose for how long the lamp should be illuminated in such a case. Alternatively he can switch to DS mode in which the lamp is illuminated as soon as dusk falls and stays illuminated until daylight is sensed. In this mode of operation the device may have an optional feature whereby after a night of operating in DS mode the device is automatically reset to PIR mode when daylight is detected or after a certain preset time. This feature is particularly convenient, for example, when the user has been working or entertaining late in his garden and has switched the device to DS mode to provide permanent illumination. In this case the user does not need to remember to switch the device back to PIR mode which consumes less power.

## Claims

1. A security device comprising an intruder sensor, an ambient light sensor and a light, wherein in a first mode of operation of said device said light is illuminated when the ambient light is sensed by the ambient light sensor to have fallen below a predetermined level of brightness and in a second mode of operation of said device said light is illuminated when an intruder is sensed by the intruder sensor and the ambient light is sensed by the ambient light sensor to have fallen below said predetermined level and wherein there is provided means for switching between said first and second modes.

2. A security device according to claim 1, wherein the device automatically resets to the second mode after a period of operation in the first mode.

3. A security device according to claim 2, wherein the period may be set by a timer.

4. A security device according to claim 2, wherein said period is terminated by the ambient light having been sensed to have increased to a predetermined level of brightness.

5. A security device according to any preceding claim in which in said second mode the lamp is illuminated for a predetermined period of time.

6. A security device according to any preceding claim in which the intruder sensor is an infra-red sensor.
